# EUROPEAN PATENT SPECIFICATION

(11) **EP 1 245 471 B1**
(45) Date of publication and mention of the grant of the patent: **01.06.2005**
(21) Application number: 01107293.1
(22) Date of filing: 23.03.2001
(51) Int. Cl.: B62D 1/16, F16D 1/072

(54) **Steering shaft with a connecting hub and method for its manufacture**
Lenkwelle mit einem Verbindungsteil und Verfahren für seine Herstellung
Arbre de direction comportant un élément de connexion et méthode pour sa fabrication

(43) Date of publication of application: 02.10.2002
(73) Proprietor: IM.EL. S.r.l., 42018 San Martino in Rio (Reggio Emilia) (IT)
(72) Inventor: Cavazzoni, Piero, 40017 S. Giovanni in Persiceto (IT)
(74) Representative: Eccetto, Mauro

(56) References cited:
- GB-A- 1 264 707
- GB-A- 2 004 028
- US-A- 3 046 759
- US-A- 3 642 311
- US-A- 3 837 755
- US-A- 5 946 977

## Description

The present invention relates to a hydraulic steering device control shaft for steering columns.

As is known, in currently marketed steering columns, the hydraulic steering device control shaft is defined by a cylindrical tubular sleeve, and by two connecting hubs so fixed to the two ends of the sleeve as to be coaxial with the longitudinal sleeve axis. Normally, one of the two connecting hubs is designed for connection to the steering wheel or hydraulic steering device, and the other for connection to a universal joint in turn connected to another mechanical member.

At present, the connecting hubs are welded to the two ends of the cylindrical tubular sleeve using an assembly method comprising the steps of: forming, in the lateral wall of and close to the two axial ends of the sleeve, through holes perpendicular to the longitudinal sleeve axis; washing the sleeve to remove any leftover grease or debris which might impair the welds; inserting the two hubs partly inside the corresponding axial ends of the tubular sleeve; and fixing the two hubs integrally to the sleeve by welding inside the through holes formed close to the two axial ends of the sleeve.

Since the welding step normally results in local deformation in turn resulting in misalignment of the connecting hubs with respect to the cylindrical tubular sleeve, the current assembly method also comprises testing the straightness of hydraulic steering device control shafts, and grinding hydraulic steering device control shafts to ensure that the connecting hubs are perfectly coaxial with the longitudinal axis of the cylindrical tubular sleeve.

Hydraulic steering device control shafts of the above type have the major drawback of being extremely expensive to produce and so greatly increasing the overall production cost of the steering column.

It is an object of the present invention to provide a hydraulic steering device control shaft which is cheaper to produce. GB-A-1264 707 discloses a shaft comprising a tubular sleeve and at least one connecting hub so fitted to an axial end of said tubular sleeve as to be coaxial with the longitudinal axis of the tubular sleeve; said connecting hub having an end portion so sized as to be inserted inside the tubular sleeve; wherein said end portion of the connecting hub is connected to the tubular sleeve by a permanent-deformation mechanical coupling; said axial end of the tubular sleeve, in fact, being deformed on to said end portion of the connecting hub.

The present invention provides the hydraulic steering device control shaft of claim 1 and the method of assembling a hydraulic steering device control shaft for steering columns of claim 4.

According to the present invention, there is provided an assembly method for assembling a hydraulic steering device control shaft for steering columns, the control shaft comprising a tubular sleeve and at least one connecting hub so fitted to an axial end of said tubular sleeve as to be coaxial with the longitudinal axis of the tubular sleeve; said connecting hub having an end portion so sized as to be inserted inside the tubular sleeve; and said assembly method being characterized by comprising the steps of:
- forming an annular groove on the outer lateral surface of the end portion of said connecting hub; diagonally cross - knurling the outer lateral surface of the end portion of said connecting hub; and
- with the connecting hub maintained coaxial with the longitudinal axis of the tubular sleeve, deforming the axial end of said tubular sleeve on to the end portion of said connecting hub so as to form a permanent-deformation mechanical coupling.

A non-limiting embodiment of the present invention will be described by way of example with reference to the accompanying drawings, in which:
Figure 1 shows a side view, with parts in section and parts removed for clarity, of a hydraulic steering device control shaft for steering columns in accordance with the teachings of the present invention;
Figure 2 shows an exploded view in perspective of the Figure 1 control shaft.

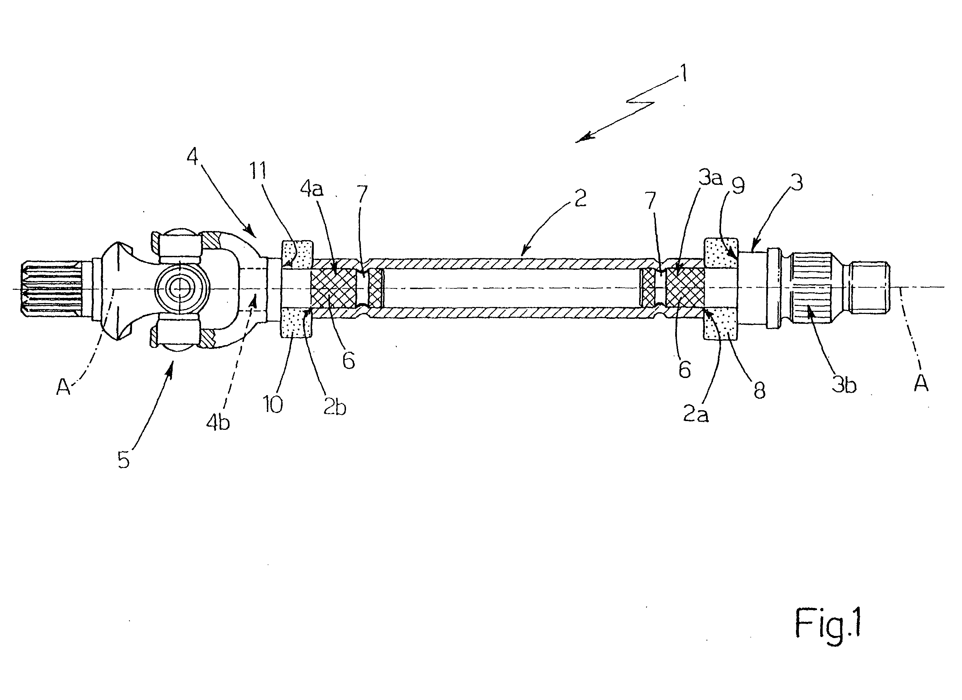

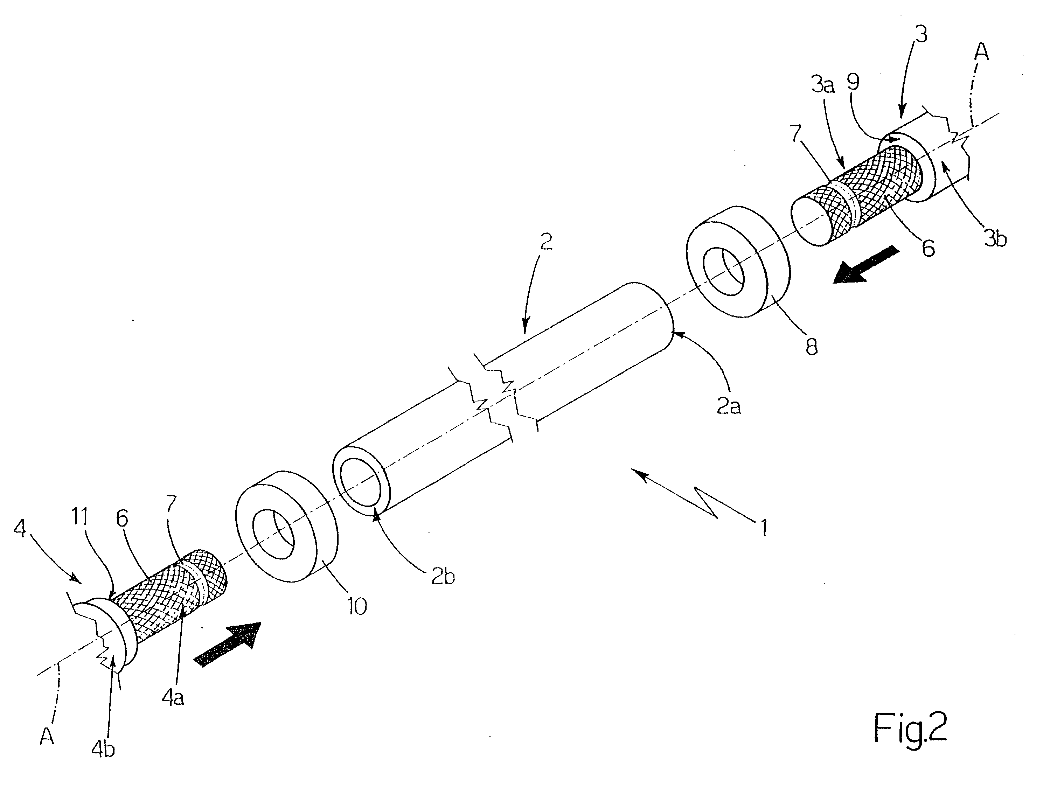

Number 1 in Figures 1 and 2 indicates as a whole a hydraulic steering device control shaft particularly suitable for a known steering column (not shown).

Control shaft 1 comprises a cylindrical tubular sleeve 2; and two connecting hubs 3 and 4 so fitted to the two axial ends 2a and 2b of the sleeve as to be coaxial with the longitudinal axis A of tubular sleeve 2.

In the example shown, hub 3 is designed for connection to any known steering wheel (not shown); and hub 4 is designed for connection to a universal joint 5 in turn connected to a known hydraulic steering device (not shown).

With reference to Figures 1 and 2, both hubs 3 and 4 are cylindrical, variable-diameter elements comprising a first end portion 3a, 4a sized for insertion inside tubular sleeve 2 and for connection to tubular sleeve 2 by permanently deforming the axial ends 2a and 2b of the sleeve; and a second end portion 3b, 4b sized for mechanical connection to the steering wheel, hydraulic steering device or universal joint 5.

With reference to Figures 1 and 2, end portion 3a of hub 3 and end portion 4a of hub 4 each have an outside diameter approximately equal to but no larger than the inside diameter of tubular sleeve 2, and each have a knurled outer lateral surface 6 and an annular groove 7 formed on outer lateral surface 6. Axial ends 2a and 2b of tubular sleeve 2 are deformable on to end portion 3a of hub 3 and end portion 4a of hub 4 respectively, so as to make hubs 3 and 4 axially and angularly integral with tubular sleeve 2. The respective knurled outer lateral surfaces 6 and respective annular grooves 7 on end portions 3a and 4a of hubs 3 and 4, in fact, provide for maximizing grip of the permanent-deformation mechanical couplings formed between hubs 3 and 4 and tubular sleeve 2.

In the example shown, control shaft 1 also comprises two spacer bushes (or bearings) : a first, indicated 8, is fitted to end portion 3a of hub 3 and interposed between axial end 2a of tubular sleeve 2 and an annular shoulder 9 separating end portions 3a and 3b of hub 3; and a second, indicated 10, is fitted to end portion 4a of hub 4 and interposed between axial end 2b of tubular sleeve 2 and an annular shoulder 11 separating end portions 4a and 4b of hub 4.

Control shaft 1 is assembled as follows:
- the knurling and annular groove 7 are formed on outer lateral surface 6 of end portion 3a of hub 3, and on outer lateral surface 6 of end portion 4a of hub 4;
- end portions 3a and 4a are then inserted inside axial ends 2a and 2b of tubular sleeve 2 with the interposition of spacer bushes (or bearings) 8 and 10, if provided; and
- keeping hubs 3 and 4 coaxial with longitudinal axis A of tubular sleeve 2, axial ends 2a and 2b of tubular sleeve 2 are deformed on to end portion 3a of hub 3 and end portion 4a of hub 4 respectively, so as to form respective permanent-deformation mechanical couplings.

The knurling on outer lateral surfaces 6 of end portions 3a and 4a makes hubs 3 and 4 angularly integral with tubular sleeve 2, while annular grooves 7 make hubs 3 and 4 axially integral with tubular sleeve 2. When axial ends 2a and 2b of tubular sleeve 2 are deformed, in fact, annular grooves 7 are engaged partly by the wall of tubular sleeve 2 to prevent withdrawal of hubs 3 and 4.

The advantages of control shaft 1 as described and illustrated herein are obvious: the manufacturing process is much simpler and faster than those currently employed, thus greatly reducing production cost.

Clearly, changes may be made to hydraulic steering device control shaft 1 as described and illustrated herein without, however, departing from the scope of the present invention.

## Claims

1. A hydraulic steering device control shaft (1) comprising a tubular sleeve (2) and at least one connecting hub (3, 4) so fitted to an axial end (2a, 2b) of said tubular sleeve (2) as to be coaxial with the longitudinal axis (A) of the tubular sleeve (2); said connecting hub (3, 4) having an end portion (3a, 4a) so sized as to be inserted inside the tubular sleeve (2) and the axial end (2a, 2b) of the tubular sleeve (2) being deformed on to said end portion (3a, 4a) of the connecting hub (3, 4) to connect the said connecting hub (3, 4) to the tubular sleeve (2) by a permanent-deformation mechanical coupling; said hydraulic steering device control shaft (1) being **characterized in that** said end portion (3a, 4a) of the connecting hub (3, 4) has an outside diameter approximately equal to but no larger than the inside diameter of the tubular sleeve (2); and that the outer lateral surface (6) of said end portion (3a, 4a) is diagonally cross-knurled.

2. A hydraulic steering device control shaft as claimed in Claim 1, **characterized in that** the outer lateral surface (6) of said end portion (3a, 4a) of the connecting hub (3, 4) has an annular groove (7).

3. A hydraulic steering device control shaft as claimed in any one of the foregoing Claims, **characterized by** comprising two connecting hubs (3) (4), each of which is so fitted to a respective axial end (2a)(2b) of the tubular sleeve (2) as to be coaxial with the longitudinal axis (A) of the tubular sleeve.

4. An assembly method for assembling a hydraulic steering device control shaft (1) for steering columns, the control shaft (1) comprising a tubular sleeve (2) and at least one connecting hub (3, 4) so fitted to an axial end (2a, 2b) of said tubular sleeve (2) as to be coaxial with the longitudinal axis (A) of the tubular sleeve (2); said connecting hub (3, 4) having an end portion (3a, 4a) so sized as to be inserted inside the tubular sleeve (2); and said assembly method being **characterized by** comprising the steps of:
- forming an annular groove (7) on the outer lateral surface (6) of the end portion (3a, 4a) of said connecting hub (3, 4);
- **diagonally cross-knurling** the outer lateral surface (6) of the end portion (3a, 4a) of said connecting hub (3, 4); and
- with the connecting hub (3, 4) maintained coaxial with the longitudinal axis (A) of the tubular sleeve (2), deforming the axial end (2a, 2b) of said tubular sleeve (2) on to the end portion (3a, 4a) of said connecting hub (3, 4) so as to form a permanent-deformation mechanical coupling.

## Patentansprüche

1. Lenkwelle (1) für eine hydraulische Lenkvorrichtung mit einer rohrförmigen Hülse (2) und wenigstens einer Anschlussnabe (3, 4), die so auf ein axiales Ende (2a, 2b) der rohrförmigen Hülse (2) gepasst ist, dass sie zur Längsachse (A) der rohrförmigen Hülse (2) koaxial verläuft, wobei die Anschlussnabe (3, 4) einen Endabschnitt (3a, 4a) aufweist, der so bemessen ist, dass er in das Innere der rohrförmigen Hülse (2) eingesetzt werden kann, und das axiale Ende (2a, 2b) der rohrförmigen Hülse (2) auf den besagten Endabschnitt (3a, 4a) der Anschlussnabe (3, 4) so verformt ist, dass die Anschlussnabe (3, 4) mit der rohrförmigen Hülse (2) in Form einer mechanischen Kupplung mit dauerhafter Verformung verbunden ist, welche Lenkwelle (1) für eine hydraulische Lenkvorrichtung **dadurch gekennzeichnet ist, dass** der Endabschnitt (3a, 4a) der Anschlussnabe (3, 4) einen Außendurchmesser aufweist, der annähernd gleich aber nicht größer als der Innendurchmesser der rohrförmigen Hülse (2) ist, und dass die äußere Seitenfläche (6) des besagten Endabschnitts (3a, 4a) diagonal kreuzförmig gerändelt ist.

2. Lenkwelle für eine hydraulische Lenkvorrichtung nach Anspruch 1, **dadurch gekennzeichnet, dass** die äußere Seitenfläche (6) des besagten Endabschnitts (3a, 4a) der Anschlussnabe (3, 4) eine Ringnut (7) aufweist.

3. Lenkwelle für eine hydraulische Lenkvorrichtung nach einem der vorhergehenden Ansprüche, **dadurch gekennzeichnet, dass** sie zwei Anschlussnaben (3, 4) umfasst, von denen jede auf ein jeweiliges axiales Ende (2a, 2b) der rohrförmigen Hülse (2) so gepasst ist, dass sie zur Längsachse (A) der rohrförmigen Hülse koaxial verläuft.

4. Montageverfahren zum Montieren einer Lenkwelle (1) für eine hydraulische Lenkvorrichtung für Lenksäulen, welche Lenkwelle (1) eine rohrförmige Hülse (2) und wenigstens eine Anschlussnabe (3, 4) umfasst, die auf ein axiales Ende (2a, 2b) der rohrförmigen Hülse (2) so gepasst ist, dass sie mit der Längsachse (A) der rohrförmigen Hülse (2) koaxial ist, welche Anschlussnabe (3, 4) einen Endabschnitt (3a, 4a) aufweist, der so bemessen ist, dass er in das Innere der rohrförmigen Hülse (2) eingesetzt werden kann, welches Montageverfahren **dadurch gekennzeichnet ist, dass** es die folgenden Schritte umfasst:
- Ausbilden einer Ringnut (7) auf der äußeren Seitenfläche (6) des Endabschnitts (3a, 4a) der Anschlussnabe (3, 4);
- diagonales, kreuzförmiges Rändeln der äußeren Seitenfläche (6) des Endabschnittes (3a, 4a) der Anschlussnabe (3, 4) und
- bei beibehaltener koaxialer Lage der Anschlussnabe (3, 4) zur Längsachse (A) der rohrförmigen Hülse (2) Verformen des axialen Endes (2a, 2b) der rohrförmigen Hülse (2) auf den Endabschnitt (3a, 4a) der Anschlussnabe (3, 4), um dadurch eine mechanische Verbindung mit permanenter Deformation zu bilden.

## Revendications

1. Arbre (1) de commande de dispositif de direction hydraulique comprenant un manchon tubulaire (2) et au moins un moyeu (3, 4) de prise monté sur une extrémité axiale (2a, 2b) dudit manchon tubulaire (2) pour être coaxial à l'axe longitudinal (A) du manchon tubulaire (2) ; ledit moyeu (3, 4) de prise comportant une partie (3a, 4a) d'extrémité dimensionnée pour introduction à l'intérieur du manchon tubulaire (2), et l'extrémité axiale (2a, 2b) du manchon tubulaire (2) étant déformée sur ladite partie (3a, 4a) d'extrémité du moyeu (3, 4) de prise pour coupler ledit moyeu (3, 4) de prise et ledit manchon tubulaire (2) par un couplage mécanique à déformation permanente ; ledit arbre (1) de commande de dispositif de direction hydraulique étant **caractérisé en ce que** ladite partie (3a, 4a) d'extrémité du moyeu (3, 4) de prise a un diamètre extérieur sensiblement égal au, mais pas plus grand que le, diamètre intérieur du manchon tubulaire (2), et **en ce que** la surface latérale extérieure (6) de ladite partie (3a, 4a) d'extrémité présente un moletage croisé.

2. Arbre de commande de dispositif de direction hydraulique selon la revendication 1, **caractérisé en ce que** la surface latérale extérieure (6) de ladite partie (3a, 4a) d'extrémité du moyeu (3, 4) de prise comporte une rainure annulaire (7).

3. Arbre de commande de dispositif de direction hydraulique selon l'une quelconque des revendications précédentes, **caractérisé par le fait qu'**il comprend deux moyeux (3), (4) de prise dont chacun est monté sur une extrémité axiale respective (2a), (2b) du manchon tubulaire (2) pour être coaxial à l'axe longitudinal (A) du manchon tubulaire.

4. Procédé de montage pour monter un arbre (1) de commande de dispositif de direction hydraulique de colonnes de direction, l'arbre (1) de commande comprenant un manchon tubulaire (2) et au moins un moyeu (3, 4) de prise monté sur une extrémité axiale (2a, 2b) dudit manchon tubulaire (2) pour être coaxial à l'axe longitudinal (A) du manchon tubulaire (2) ; ledit moyeu (3, 4) de prise comportant une partie (3a, 4a) d'extrémité dimensionnée pour introduction à l'intérieur du manchon tubulaire (2) ; et ledit procédé de montage étant **caractérisé par le fait qu'**il comprend les étapes, dans lesquelles :
on forme une rainure annulaire (7) sur la surface latérale extérieure (6) de la partie (3a, 4a) d'extrémité dudit moyeu (3, 4) de prise ;
on forme un moletage croisé sur la surface latérale extérieure (6) de la partie (3a, 4a) d'extrémité dudit moyeu (3, 4) de prise ; et
le moyeu (3, 4) de prise étant maintenu coaxial à l'axe longitudinal (A) du manchon tubulaire (2), on déforme l'extrémité axiale (2a, 2b) dudit manchon tubulaire sur la partie (3a, 4a) d'extrémité dudit moyeu (3, 4) de prise de façon à former un couplage mécanique à déformation permanente.
